# EUROPEAN PATENT SPECIFICATION

(11) **EP 3 855 140 B1**
(45) Date of publication and mention of the grant of the patent: **19.03.2025**
(21) Application number: 20210867.6
(22) Date of filing: 01.12.2020
(51) Int. Cl.: G01J 5/00, G01J 5/02, G01J 5/04, G01J 5/08, G01J 5/10, G03B 17/56, G01J 5/07

(54) **METHOD FOR DETERMINING THE SURFACE TEMPERATURE OF AN OBJECT USING A SHORT-WAVE THERMAL CAMERA**
VERFAHREN ZUR BESTIMMUNG DER OBERFLÄCHENTEMPERATUR EINES OBJEKTS UNTER VERWENDUNG EINER KURZWELLEN-WÄRMEKAMERA
PROCÉDÉ POUR DÉTERMINER LA TEMPÉRATURE DE SURFACE D'UN OBJET À L'AIDE D'UNE CAMÉRA THERMIQUE À ONDES COURTES

(30) Priority: 05.12.2019 EP 19213805
(43) Date of publication of application: 28.07.2021
(73) Proprietor: Basell Polyolefine GmbH, 50389 Wesseling (DE)
(72) Inventor: LING, Antonio, 50374 Erftstadt (DE); GOEBEL, Volker, 53501 Grafschaft (DE); ALBRECHT, Dirk, 53577 Neustadt (DE)
(74) Representative: LyondellBasell

(56) References cited:
- EP-A1- 3 503 523
- WO-A2-2004/069547
- CN-A- 107 367 331
- CN-A- 108 476 295
- KR-B1- 101 965 658
- KR-B1- 101 984 638
- US-A1- 2006 049 352
- US-A1- 2017 284 874
- US-B1- 6 329 079

## Description

### FIELD OF THE INVENTION

The present disclosure provides a mounting device and a method for determining the surface temperature of an object located inside a thermal reactor using a short-wave thermal camera as well as an apparatus comprising said object and said short-wave thermal camera. The present disclosure further provides a process for cracking hydrocarbons which employs a method for determining the surface temperature of the cracking coil.

### BACKGROUND OF THE INVENTION

Cracking of hydrocarbons is a well-established process for the production of ethylene and propylene which are both important building blocks for other chemicals, in particular plastics.

In order to gain the desired hydrocarbons, a feedstock of hydrocarbons such as ethane and naphtha is fed into a so-called cracking coil and brought up to the cracking temperature with heat supplied from the outside of the coil. The coils may be made from high-temperature alloy steel comprising nickel and chromium. US 6,329,079 B1 discloses that the coils may be formed from an iron alloy that basically contains 25 wt.% chromium, 20 wt.% nickel and the balance essentially iron.

As a result of the thermal cracking of the hydrocarbons, carbon deposition occurs on the inside of the coils. This so-called coking leads to an increase pressure drop in the cracking coil and lowers the heat transfer efficiency, eventually causing a reduction in the operation efficiency of the thermal cracking furnace. Due to the decreased heat transfer efficiency, the temperature on the outside of the coils has to be constantly increased in order to reach the needed cracking temperatures on the inside. However, increasing the temperature is only possible up to a maximum temperature which is usually determined by the material of the coils taking into account a certain safety margin. Ultimately, the coke deposition inside the coils has to be removed, referred to as decoking, resulting in an interruption of the whole process. Decoking may be carried out by passing a flow of steam or a steam/air mixture through the coils, converting the hard, solid carbon layer to carbon monoxide and carbon dioxide which can then be flushed out.

There is accordingly a need to accurately determine the point in time where decoking of the coil becomes necessary. One sign that decoking of the system might become necessary is a sudden decrease of the pressure in the coils. Another is an increase of the temperature of the surface of the coils. Therefore, careful monitoring of the surface temperature of the coil would be one way to determine said moment. However, so far accurate determination and monitoring of the temperature is still an issue.

The surface temperature of cracking coils is usually determined manually using a pyrometer, usually in form of a hand-held portable device. Although the measurement is usually carried out at a defined inspection window, the conditions under which the temperature is determined may vary significantly, making it difficult to obtain reliable data. Since the temperature has to be determined through an inspection window of the thermal cracking furnace, the distance between the pyrometer and the coil may vary depending on the heat sensitivity of the person carrying out the measurement. Furthermore, the position on the surface of the coil where the temperature is measured may also differ from measurement to measurement due to different body heights of the person carrying out the measurements or different angles of the pyrometer. Due to the unreliable data, the furnace may either be decoked too early, resulting in a loss of production, or may be left too long in operation under increased temperatures which accelerates aging of the cracking coil and the furnace. In addition, the costs for accurately measuring the temperature of cracking coils using pyrometers are rather high due to the special requirements with regard to the equipment due to the high temperatures of up to 900°C and more.

US 2017/0284874 A1 is directed to the temperature data acquisition on process tubes in a furnace and discloses a method in which one or more digital images of a subset of tubes inside the furnace provide temperature information for the imaged tubes, and temperature information for non-imaged tubes is determined from the temperature information for the imaged tubes and measured temperatures of combined effluent from the imaged and non-imaged tubes. US 2006/0049352 A1 discloses a device for providing thermal images of, for example, the wall surface of tubes used in direct-fired process heaters, such as in petrochemical cracking furnaces. The device includes a housing with an opening for directing incident infrared rays along an optical path through an optical assembly optimized to have a spectral band width of 3 to 14 um.

US 6,479,802 concerns a process for contact-less temperature regulation, in which the temperature is measured in a contact-less mode with a temperature measurement device and detected as analog value and then digitized, wherein moreover there is provided a digital regulator which outputs a control value in dependence on the detected temperature and predetermined regulating parameters and a corresponding apparatus.

US 2006/0049352 A1 refers to an apparatus for thermal imaging which can provide thermal images such as the thermal imaging of the tubes of cracking furnaces. The thermal imager uses a wavelength of 3 µm to 14 µm and can be positioned outside a viewport of a furnace.

US 2017/0284874 A1 relates to a method for temperature data acquisition on process tubes in a furnace and discloses that thermal images of the tubes can be taken by thermal imaging devices. The thermal imaging device may be a hand-held portable device or preferably a fixed mounted device.

KR 101 984 638 B1 discloses a fixing device for a camera which allows to install a camera on an artificial structure such as a wall or a pillar. The camera holder is preferably a camera cradle configured in a cantilever shape.

KR 101 965 658 B1 discloses a mounting frame attached to a pressure vessel, for example in a nuclear power plant. The mounting frame includes a camera module for installing a camera.

CN 107 367 331 A discloses a continuous measurement device for monitoring the temperature of furnace tubes of an ethylene cracking furnace. The device comprises a temperature measurement part which is arranged on a revolving swinging work bench. The revolving swinging work bench is arranged on a movable part, and the movable part is arranged on a track which is arranged on a support rack and parallel to the arrangement direction of cracking furnace openings.

In light of the above, there is a need to provide a reliable and cost-effective method for determining the surface temperature of a cracking coil thereby increasing the production capacity and avoiding thermal overheating of the coils which often results in premature aging.

### SUMMARY OF THE INVENTION

According to the invention the above stated problem is solved by a method for determining the surface temperature of an object according to claim 1 and a corresponding apparatus according to claim 10. Favourable embodiments are defined in the dependent claims.

### BRIEF DESCRIPTION OF THE DRAWINGS

Figure 1 shows an exemplary embodiment of the apparatus according to the present disclosure.
Figure 2 shows another exemplary embodiment of the apparatus according to the present disclosure.
Figure 3 shows another exemplary embodiment of the apparatus according to the present disclosure.
Figure 4 shows an exemplary embodiment of a mounting device which can be used in the method of the present disclosure.

### DETAILED DESCRIPTION OF THE INVENTION

The present disclosure provides a method for determining the surface temperature of an object, in particular a cracking coil, located inside of a thermal reactor, in particular a steam cracker, using a short-wave thermal camera. The method uses a mounting device which is attached to the outside of a thermal reactor and has an adjustable retainer configured to receive a short-wave thermal camera. The mounting device is preferably attached to the outside of the thermal reactor by means of a fixing device which contains means for receiving the mounting device.

The present disclosure accordinalv provides a method for determining the surface temperature of an object comprising the steps of:
a) positioning a camera within a mounting device positioned in front of an inspection window on the outside of the thermal reactor;
b) focusing the camera on the surface of the object located inside the thermal reactor;
c) acquiring image information by the camera;
d) determining the temperature on the surface of the object at one or more spots within a pre-determined area on the basis of the image information;
e) storing the acquired image information and the determined temperature data,
wherein the thermal camera is a short-wave thermal camera having an operating wave length of 0.5 to 3.5 µm, preferably of 0.85 to 1.1 µm.

The method of the present disclosure offers a reliable and reproduceable way to determine the temperature of an object which is located inside a thermal reactor by providing the device used for determining the temperature in a fixed location, i.e. in a mounting device, thereby eliminating any inaccuracies in the measurement which might be caused by different persons carrying out the measurement. Further, according to the present disclosure, the temperature of the surface of the object is determined within a fixed area on the surface of the object, thus increasing the comparability of the obtained data and providing a complete and constant monitoring of the temperature development. In addition, using a short-wave thermal camera with a fixed operating wave-length reduces the possibility of incorrect measurements by choosing the wrong emissivity.

During determining the surface temperature of an object located inside a thermal reactor, the mounting device for the camera is fixedly attached to the outside of the thermal reactor. This way, deviations in the measurement due to different positions of the camera may be avoided. However, the mounting device is designed to be attachable to the outside of the thermal reactor, i.e. the mounting device is designed in a way that it can easily be attached to the to the outside of the thermal reactor but can also easily be detached from the outside of the thermal reactor. In that manner it is possible to carry out the method of the present disclosure with one mounting device and one thermal camera at a plurality of inspection windows but still having the advantage of determining the temperature with an exact positioning. Using a portable mounting device thus allows to determine surface temperatures accurately in an easy to carry out manner without having to invest multiple times in equipment for adjusting the positioning of the thermal camera.

In preferred embodiments, the mounting device is designed that it can be attached to a fixing device which is installed at the outside of the thermal reactor. Preferably each inspection window which is used for determining the surface temperature of an object located inside a thermal reactor is equipped with such a fixing device. Having fixing devices installed at the outside of the thermal reactor allows especially easy attaching and detaching of the mounting device to and from the thermal reactor. Preferably, the mounting device and the fixing devices are designed in a way that the mounting device is connected to the fixing devices in a form-locking manner. The fixing device may, for example, comprise a sleeve into which a part of the mounting device is inserted in a form-locking manner.

In preferred embodiments, one or more fixing devices are installed at the outside of the thermal reactor and the mounting device is attached to the one or more fixing devices. Attaching the mounting device to a fixing device installed at the outside of the thermal reactor allows positioning the thermal camera in a reproducible and precisely manner. The one or more fixing devices are preferably installed at the outside by common fastening techniques such as welding, screwing or bolting.

In preferred embodiments, the fixing device comprises positioning means for attaching the mounting device in different positions. The positioning means of the fixing device allow a course setting of the position of the thermal camera. For example, the sleeve for inserting a part of the mounting device may be installed in a way that it can be swiveled horizontally and the positioning means allow to adjust of the position of the sleeve to fixed positions.

The mounting device used in the method of the present disclosure has an adjustable retainer which is configured to receive the short-wave thermal camera. The adjustable retainer preferably comprises a turntable, in particular a precision turntable, for fine adjustment of the camera position and to allow for high-precision measurements.

The mounting device preferably comprises means for attaching one or more operating aids. The operating aid is preferably configured to assist the user in carryout the method of the present disclosure by providing a graphic interface. In preferred embodiments, the operating aid correlates the acquired image information and the determined temperature data and transforms the information into a format which is easy to assess, for example by a software product, and in this way facilitates an accurate temperature measurement in an reproducible manner and so assists in carrying out the systematic process of the present disclosure for determining surface temperatures of objects located inside thermal reactors. The operating aid is preferably a tablet computer.

In preferred embodiments of the method for determining the surface temperature, a heat resistant glass is placed in front of the open inspection window before positioning the thermal camera in front of the glass. To this end, it is possible to fasten a plate of heat-resistant glass to a fixture which is part of the mounting device, it is possible to fasten a plate of heat-resistant glass to a fixture which is part of the fixing device and it is possible to fasten a plate of heat-resistant glass to a separate fixture installed at the outside of the thermal reactor. Preferably, the plate of heat-resistant glass is fastened to a fixture which is part of the mounting device Thus, in an embodiment, the mounting device comprises a fixture for fastening a plate of heat-resistant glass.

The method of the present disclosure may be used to determine the surface temperature of any object which is not easily accessible. However, the method is in particular designed to determine the surface temperature of an object located inside a thermal reactor, in particular a cracking coil being located in the radiant section of a steam cracker. Therefore, in a preferred embodiment of the present disclosure, the object in question is located inside the radiant section of a steam cracker. In a further preferred embodiment, the object in question is a cracking coil located inside the radiant section of a steam cracker. The method of the present disclosure is especially designed for monitoring the surface temperature of a cracking coil.

In preferred embodiments, the surface of the object of which the temperature is to be determined is a metal surface, in particular a high-temperature alloy steel comprising nickel and chromium. The object having a metal surface is preferably a coil, in particular a cracking coil.

The method of the present disclosure uses a short-wave thermal camera for determining the temperature. In order to reduce heat loss and improve worker protection, the measurement should be carried out through an inspection window made of heat-resistant furnace glass, preferably without any interference of the material of the inspection window. Therefore, the thermal camera used in the method operates at a wave length of 0.5 to 3.5 µm, preferably 0.85 to 1.1 µm. The camera may be operated in single- or multiple-frame modus or in video sequence modus, depending on the respective requirements.

The aim of the present disclosure is to provide a reliable and reproduceable method for determining the surface temperature of an object, in particular of a cracking coil. However, the method should not only deliver accurate results but should also be easy to carry out to avoid any unnecessary deviations. One way to ensure reproducibility of the obtained data is to determine the temperature within a fixed area on the surface of the coil so that always the same position is chosen. In order to make sure that the position is not altered and at the same time provide an easily manageable way to determine the temperature with high accuracy, the information concerning the position of the point of measurement on the surface of the coil and the information about said position should be easily accessible. Therefore the method includes the step of retrieving object identification information by scanning a bar code, and adjusting the position and/or the focus of the camera according to the acquired object identification information. The pre-determined area on the surface of the object may be made visual by providing a virtual frame on the surface of the object. The object identification information includes information about the position of the object relative to the camera as well as information regarding the position of the pre-determined area on the surface of the object.

The information is encoded in a bar code and is thus easily accessible by simply scanning the bar code. The bar code may either be one-dimensional or two-dimensional, for example in the form of a linear bar code or a QR-code. The label containing the code may be placed within easy access, for example on the outside of the thermal reactor.

Further, in order to provide a reliable pool of data, the data has to be stored. In a preferred embodiment, storing of the data is initiated with the help of a software or by scanning a bar code to initiate allocating the obtained data to a storage device.

The temperature on the surface of the object is detected at one or more spots within the pre-determined area on the surface of the object. This allows for an especially accurate measurement and reliable data. In a preferred embodiment of the inventive method, detecting the temperature on the surface of the object further comprises detecting the maximum and the minimum temperature value, respectively, and calculating the average temperature within the pre-determined area on the surface of the object. By automatically determining the minimum and maximum temperature value as well as calculating the average surface temperature, a reliable data source can be established which avoids the danger of single outbreaks.

In a preferred embodiment, the camera is operated by means of an information processing system. Once activated, the information processing system sends all required information to the camera so that the method for determining the surface temperature of the object is further standardized.

As discussed above, the surface temperature of the coil in cracking processes is a very important information that can be used to ensure effective operation of the coil. In a preferred embodiment, the data obtained by the method of the present disclosure is used to determine the maximum operating temperature of the object. The maximum operating temperature according to the present disclosure is the temperature to which the object may be heated to effectively operate without causing any accelerated aging of the object. This temperature data may then be used to determine the right time for decoking the coil. This way, unnecessary interruption of the cracking process is avoided while at the same time ensuring that the object, e.g. a cracking coil, is operated under optimal condition to ensure a long lifetime.

In a preferred embodiment, the method further comprises the steps of opening an inspection window in the wall of a thermal reactor, followed by placing a heat resistant glass in front of the open inspection window before positioning the thermal camera in front of the glass. After the measuring is completed, the heat resistant glass is preferably removed, and the inspection window closed.

The method of the present disclosure is accurate and easy to carry out. The method comprises the following steps:
a) positioning a thermal camera within a mounting device positioned in front of an inspection window on the outside of the thermal reactor;
b-1) retrieving object identification information by scanning a bar code;
b-2) adjusting the position and/or the focus of the camera according to the object identification information;
c) acquiring image information by the camera
d) determining the temperature on the surface of the object at one or more spots within a pre-determined visual area on the basis of the image information;
e) storing the obtained data and the object identification information,
wherein the thermal camera is a short-wave thermal camera having an operating wave length of 0.5 to 3.5 µm, preferably of 0.85 to 1.1 µm.

The method of the present disclosure further comprises the following steps:
a) opening an inspection window in the wall of the thermal reactor;
b) placing a heat resistant glass in front of the open inspection window;
c) positioning a camera within a mounting device positioned in front of the inspection window on the outside of the thermal reactor;
d) focusing the camera on the surface of the object located inside the thermal reactor;
e) acquiring image information by the camera;
f) determining the temperature on the surface of the object at one or more spots within a pre-determined area on the surface of the object, based on the image information;
g) storing the obtained data;
h) removing the heat resistant glass;
i) closing the inspection window;
wherein the thermal camera is a short-wave thermal camera having an operating wave length of 0.5 to 3.5 µm.

The heat resistant glass placed in front of the open inspection window is meant to shield the worker and minimize heat loss. However, in order to avoid damage of the glass due to the high temperatures inside the reactor, a small gap has to be kept between the glass and the opening. The resulting air flow on the one hand cools the glass but on the other hand also allows cooler air to enter the reactor, resulting in thermal stress of the coil. It was surprisingly found that with the help of the method of the present disclosure, the time required to determine the temperature could be significantly shortened, resulting in a reduced heat loss over time and reducing the risk of thermal stress to the object.

In a preferred embodiment, the pre-determined visual area on the surface of the coil is located at the center of the coil and is preferably congruent with the inspection window. The position of the coil may change over time due to deformation, such as bending, because of the high-temperature environment. The adjustable retainer, e.g. a turntable, allows for the adjustment of the pre-determined visual area on the surface of the coil in order to provide high-precision measurements.

The present disclosure further provides an apparatus to which the method of the present disclosure is applied. The apparatus includes a thermal reactor with an inspection window, preferably a closable inspection window, an object, in particular a cracking coil, located inside the thermal reactor, in particular in the radiant section of the thermal reactor, and a short-wave thermal camera mounted in a mounting device positioned in front of the inspection window on the outside of the thermal reactor, wherein the camera has an operating wave length of 0.5 to 3.5 µm, preferably 0.85 to 1.1 µm. In a preferred embodiment, the mounting device is fixedly attached to the outside of the thermal reactor.

Preferably, the glass is a heat resisting glass, preferably quartz glass. This way, any interference of the material of the inspection window with the operating wave length of the temperature measuring device may be excluded.

In a preferred embodiment, the apparatus of the present disclosure is a cracking reactor for cracking hydrocarbons.

The apparatus further comprises means for adjusting a virtual pre-determined area on the surface of the coil. This way, any deviation due to deformation of the coil may be compensated, if needed. In a preferred embodiment, the position is adjusted manually, for example by use of an adjustable retainer such as a turntable.

The apparatus further comprises a scanning device to scan a bar code; control means which are connected to the scanning device and the camera, the control means being configured to allocate object identification information to and from the scanned bar code; and wherein the control means are being further configured to adjust the position and/or focus of the camera according to the object identification information and initiate image acquisition to acquire image information by the camera and wherein the apparatus further comprises storing means to store the acquired data together with the object identification information.

In a preferred embodiment, the apparatus of the present disclosure further comprises means for attaching the storing means and/or one or more operating aids to the apparatus. The operating aid is preferably configured to assist the user in carryout the method of the present disclosure by providing a graphic interface.

In addition, the present disclosure provides a process for cracking hydrocarbons comprising the following steps:
- Feeding a feedstock of hydrocarbons into a cracking coil located inside a thermal reactor;
- Heating the feedstock inside the cracking coil by way of heat exchange;
- Measuring the temperature on the surface of the cracking coil; and
- Quenching of the reaction products leaving the coil;
wherein measuring of the temperature is carried out by a method according to the present disclosure.

In preferred embodiments of the present disclosure, measuring of the surface temperature of the cracking coils is carried out at least every second day, more preferably once per day to 5 times a day and in particular twice a day to three times a day.

The step of measuring the temperature on the surface of the cracking coil comprises the following steps:
a) positioning a camera within a mounting device positioned in front of an inspection window on the outside of the thermal reactor;
b) focusing the camera on the surface of the cracking coil;
c) acquiring image information by the camera;
d) determining the temperature on the surface of the cracking coil at one or more spots within a pre-determined area on the basis of the image information;
e) storing the obtained data,
wherein the thermal camera is a short-wave thermal camera having an operating wave length of 0.5 to 3.5 µm, preferably of 0.85 to 1.1 µm.

In preferred embodiments, the thermal reactor for cracking hydrocarbons has a closable inspection window. In a further preferred embodiment, the process comprises the steps of opening the respective inspection window in the wall of the thermal reactor and placing a heat resistant glass, preferably quartz glass, in front of the open inspection window before positioning the thermal camera.

In particular in the process of cracking hydrocarbons, monitoring of the temperature of the surface of the cracking coil is important, as the temperature can be used as a measure to determine whether the heating of the feedstock inside the cracking coil is still effective or whether the process has to be interrupted and the reactor be isolated for decoking.

The process of the present disclosure allows for precise monitoring of the temperature, thereby reducing the number of unnecessary decokings. In preferred embodiments of the present disclosure, the decoking is therefore carried out once every ten days to twice a year and in particular once every 20 days to once every 90 days.

In order to be able to reliably determine the temperature, the process of the present disclosure offers a standardized procedure which eliminates deviations in the obtained data due to different angles or positions of measurement. The inventive process is particularly designed to be user-friendly. The inventive process further comprises the steps of
a) positioning a thermal camera within a mounting device positioned in front of a closable inspection window on the outside of the thermal reactor;
b-1) retrieving object identification information by scanning a bar code;
b-2) adjusting the position and/or the focus of the camera according to the object identification information;
c) acquiring image information by the camera
d) determining the temperature on the surface of the object at one or more spots within a pre-determined visual area based on the image information;
e) storing the obtained data and the object identification information;
wherein the thermal camera is a short-wave thermal camera having an operating wave length of 0.5 to 3.5 µm, preferably 0.85 to 1.1 µm.

It was surprisingly found that the process of the present disclosure not only allows for an optimized monitoring of the process parameters, in particular the results of the temperature measurements inside the reactor are more precise, but also that the time for measuring the temperature could be significantly shortened, thus reducing the risk of thermal stress of the coil due to heat loss during measuring. Further, due to the shortened time of the measurement, heat loss over time is significantly reduced.

Moreover, it was surprisingly found that, in a process for cracking hydrocarbons, measuring the surface temperature of a cracking coil according to the method of the present disclosure may not only be employed advantageously during the cracking process itself but also during decoking, i.e. while the coke depositions on the walls of the coils are removed. Measuring the surface temperature of a cracking coil during decoking allows to control the decoking process and ensures that the coils do not overheat. In a preferred embodiment, the process of the present disclosure is therefore used to determine the surface temperature of the cracking coil during cracking of hydrocarbons within the cracking coil and/or during decoking of the cracking coil. In a further preferred embodiment, determining of the surface temperature of the coil is carried out during the cracking process and during decoking of the coil.

In a preferred embodiment, the process of the present disclosure is a process for the production of ethylene and/or propylene. In a further preferred embodiment, heating of the feedstock is carried out as a two-step process. In a first step, the feedstock is preferably heated to a temperature of 400 to 700°C, preferably 500 to 680°C, before being introduced into the cracking coil. Inside the cracking coil, the feedstock is further heated to a temperature of 750 to 1000°C, preferably 750 to 900°C.

Within the course of the present invention, it was surprisingly found that a short-wave thermal camera may be used to contactlessly determine the temperature on the surface of a cracking coil. Therefore, the present disclosure also provides the use of a short-wave thermal camera for measuring the temperature of a surface within a thermal reactor, the camera having an operating wave length of 0.5 to 3.5 µm, preferably 0.85 to 1.1 µm.

Preferably, the obtained data is used to determine the maximum operating temperature of an object. With the help of the acquired data it is thus possible to run the process of cracking hydrocarbons at its optimum, in particular by being able to determine the right time for decoking the inside of the coil.

The present disclosure will be further explained with references to the provided figures which are by no means to be understood as limiting the scope and spirit of the disclosure.

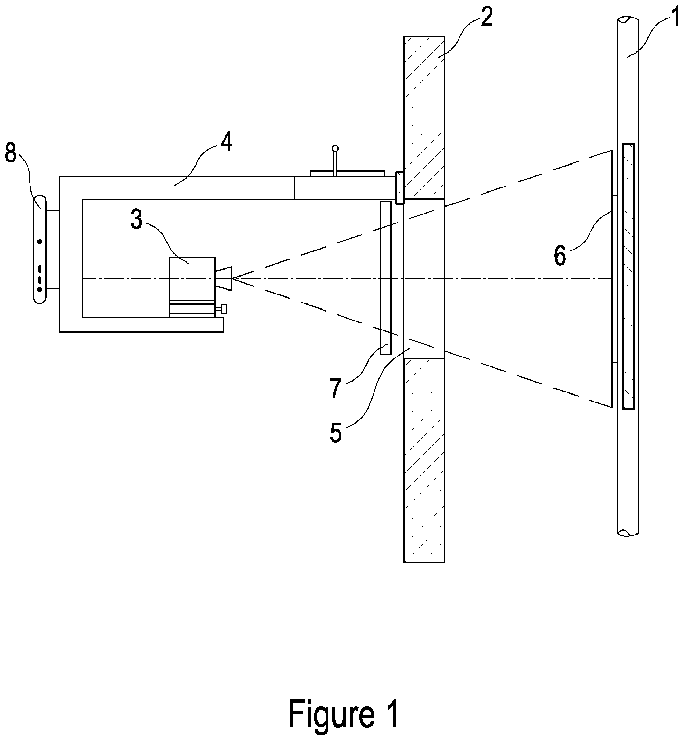

With reference to Figure 1, an exemplary embodiment of an apparatus according to the present disclosure is described wherein a short-wave thermal camera (3) is mounted in front of a closable inspection window (5) of a thermal reactor (2) with the help of a mounting device (4). The mounting device (4) is attached to the outside of the reactor (2) by means of a fixing device (14) which is configured to receive the mounting device (4). In this particular embodiment, the fixing device (14) is a metal frame which is fixedly attached to the wall of the reactor around the inspection window (5). The inspection window (5) is shielded by a plate of heat-resistant glass (7). The camera (3) is positioned to focus on a pre-determined area (6) on the surface of an object (1) located inside the thermal reactor (2), the object (1) being a coil as used in the process for cracking hydrocarbons. In the exemplary embodiment as shown in Figure 1, the apparatus is further equipped with an operating aid (8) configured to assist in carrying out the process of the present disclosure.

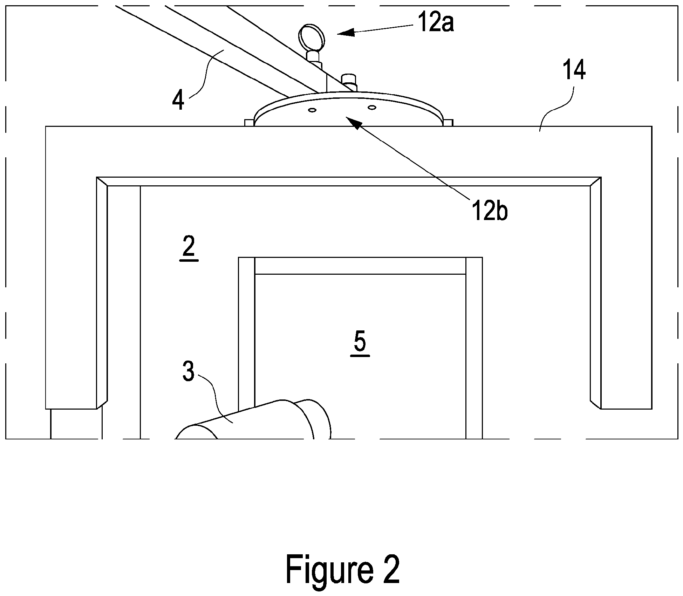

With reference to Figure 2, an excerpt of an apparatus is shown, illustrating the position of the mounting device (4) and the fixing device (14) relative to the inspection window (5). The camera (3) is positioned in front of the inspection window (5) by means of attaching the mounting device (4) to the reactor (2) by means of a fixing device (14) in the form of a metal frame placed around the inspection window (5). The fixing device (14) is equipped with positioning means (12a, 12b) to adjust the position of the mounting device (4) and the camera (3) so that the camera (3) mounted within the mounting device (4) is positioned in front of the inspection window (5) of the thermal reactor (2).

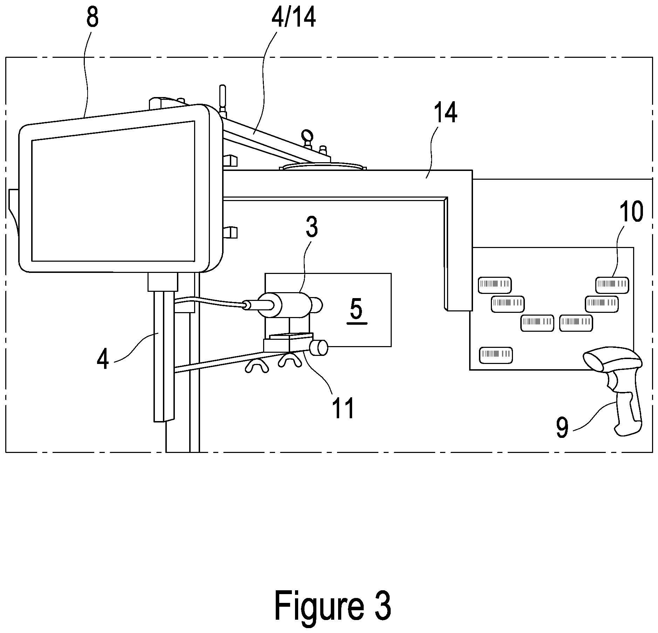

With reference to Figure 3, another exemplary embodiment of the present disclosure is described, wherein the camera (3) is positioned in front of an inspection window (5) of a thermal reactor (2) with the help of a mounting device (4) equipped with an operating aid (8). The mounting device (4) is attached to the reactor (2) by connecting the mounting device (4) to a fixing device (14). Further provided are a bar code scanner (9) and the respective bar codes (10) for retrieving the object identification information. The position of the mounting device (4) may be adjusted with the help of adjusting means (12a, 12b) and the position of the camera (3) may be adjusted using an adjustable retainer (11) on which the camera (3) may be mounted.

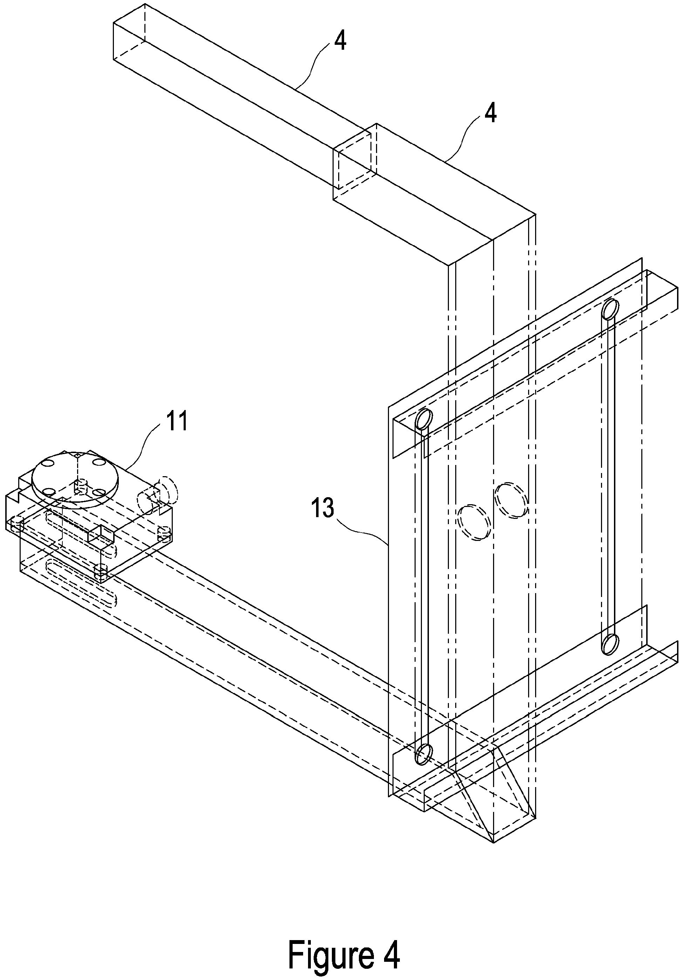

Figure 4 shows an exemplary embodiment of a mounting device (4) having an adjustable retainer (11) for receiving a short-wave thermal camera and a device (13) for attaching an operating aid which mounting device can be used in the method of the present disclosure.

## Claims

1. A method for determining the surface temperature of an object (1) located inside a thermal reactor (2), comprising the steps of:
a) positioning a short-wave thermal camera (3) within a mounting device (4) having an adjustable retainer (11) configured to receive the short-wave thermal camera (3), wherein the mounting device (4) is attached to the outside of the thermal reactor (2) and the mounting device (4) is positioned in front of an inspection window (5) on the outside of the thermal reactor (2);
b) focusing the camera (3) on the surface of the object (1) located inside the thermal reactor (2);
c) acquiring image information by the camera (3);
d) determining the temperature on the surface of the object (1) at one or more spots within a pre-determined area (6) on the basis of the image information;
e) storing the acquired image information and the determined temperature data,
wherein the thermal camera (3) is a short-wave thermal camera having an operating wave length of 0.5 to 3.5 µm and
the method is **characterized by** comprising a step:
f) retrieving object identification information by scanning a bar code (10) and adjusting the position and/or focus of the camera (3) according to the object identification information and the object identification information includes information with respect to the position of the object (1) relative to the camera (3) and information with respect to the position of the pre-determined area (6) on the surface of the object (1).

2. The method of claim 1, wherein one or more fixing devices (14) are installed at the outside of the thermal reactor (2) and the mounting device (4) is attached to the one or more fixing devices (14).

3. The method of claim 1 or 2, wherein the mounting device (4) and the one or more fixing devices (14) are connected in a form-locking manner.

4. The method of any of the claims 1 to 3, wherein the one or more fixing devices (14) are equipped with positioning means (12a, 12b) which allow to attach the mounting device (4) to the fixing device (14) in different positions.

5. The method of any of the claims 1 to 4, wherein the mounting device (4) comprises means (13) for attaching one or more operating aids (8).

6. The method of any of claims 1 to 5, wherein the method further comprises the steps of opening an inspection window (5) in the wall of a thermal reactor (2), followed by placing a heat resistant glass (7) in front of the open inspection window (5) before positioning the thermal camera (3) in front of the glass (7).

7. The method of any of claims 1 to 6, wherein the surface of the object (1) is a metal surface, the metal preferably being a high-temperature alloy steel comprising nickel and chromium; and/or the object (1) preferably being a coil, in particular a cracking coil.

8. The method of any of claims 1 to 7, wherein detecting the temperature on the surface of the object (1) comprises detecting the maximum and minimum temperature value and calculating the average temperature within the pre-determined area (6) on the surface of the object (1).

9. The method of any of claims 1 to 8, wherein the obtained data is used for determining the maximum operating temperature of the object (1).

10. An apparatus having a thermal reactor (2) with an inspection window (5), an object (1) located inside the thermal reactor (2) and a short-wave thermal camera (3) mounted in a mounting device (4) having an adjustable retainer (11) configured to receive the short-wave thermal camera (3), wherein the mounting device (4) is attached to the outside of the thermal reactor (2) and the mounting device (4) is positioned in front of the inspection window (5) on the outside of the thermal reactor (2), wherein the camera (3) has an operating wave length of 0.5 to 3.5 µm, preferably 0.85 to 1.1 µm, wherein the apparatus further comprises storing means and control means which are connected to the camera and are configured to carry out steps b) - e) of claim 1, and wherein the apparatus is **characterized by** comprising a scanning device (9) to scan a bar code (10),the scanning device being connected to the control means (9), and the control means are configured to carry out the method step f) of claim 1.

11. A process for cracking hydrocarbons comprising the following steps:
- Feeding a feedstock of hydrocarbons into a cracking coil located inside a thermal reactor (2);
- Heating the feedstock inside the cracking coil by way of heat exchange;
- Measuring the temperature on the surface of the cracking coil; and
- Quenching of the reaction products leaving the coil;
wherein measuring of the temperature is carried out by the method of any of claims 2 to 9.

12. The process of claim 11, wherein determining the surface temperature of the coil is carried out during the cracking process and/or during decoking of the coil.

## Patentansprüche

1. Verfahren zur Bestimmung der Oberflächentemperatur eines Objekts (1), das sich innerhalb eines thermischen Reaktors (2) befindet, umfassend die Schritte:
a) Positionieren einer Kurzwellen-Wärmekamera (3) innerhalb einer Montagevorrichtung (4), die eine justierbare Halterung (11) aufweist, die ausgestaltet ist, um die Kurzwellen-Wärmekamera (3) aufzunehmen, wobei die Montagevorrichtung (4) an der Außenseite des thermischen Reaktors (2) befestigt ist und die Montagevorrichtung (4) vor einem Inspektionsfenster (5) auf der Außenseite des thermischen Reaktors (2) positioniert ist;
b) Fokussieren der Kamera (3) auf die Oberfläche des Objekts (1), das sich innerhalb des thermischen Reaktors (2) befindet;
c) Erfassen von Bildinformationen durch die Kamera (3);
d) Bestimmen der Temperatur auf der Oberfläche des Objekts (1) an einem oder mehreren Punkten innerhalb eines vorbestimmten Bereichs (6) basierend auf den Bildinformationen;
e) Speichern der erfassten Bildinformationen und der bestimmten Temperaturdaten, wobei die Wärmekamera (3) eine Kurzwellen-Wärmekamera mit einer Betriebswellenlänge von 0,5 bis 3,5 µm ist, und
das Verfahren **dadurch gekennzeichnet ist, dass** es einen Schritt umfasst:
f) Abrufen von Objektidentifikationsinformationen durch Scannen eines Barcodes (10) und Justieren der Position und/oder des Fokus der Kamera (3) gemäß den Objektidentifikationsinformationen, und wobei die Objektidentifikationsinformationen Informationen in Bezug auf die Position des Objekts (1) relativ zu der Kamera (3) und Informationen in Bezug auf die Position des vorbestimmten Bereichs (6) auf der Oberfläche des Objekts (1) einschließen.

2. Verfahren nach Anspruch 1, wobei eine oder mehreren Fixiervorrichtungen (14) an der Außenseite des thermischen Reaktors (2) installiert sind und die Montagevorrichtung (4) an der einen oder den mehreren Fixiervorrichtungen (14) befestigt ist.

3. Verfahren nach Anspruch 1 oder 2, wobei die Montagevorrichtung (4) und die eine oder mehreren Fixiervorrichtungen (14) in formschlüssiger Weise verbunden sind.

4. Verfahren nach einem der Ansprüche 1 bis 3, wobei die eine oder mehreren Fixiervorrichtungen (14) mit Positioniermitteln (12a, 12b) ausgerüstet sind, die Befestigen der Montagevorrichtung (4) an der Fixiervorrichtung (14) in unterschiedlichen Positionen zulassen.

5. Verfahren nach einem der Ansprüche 1 bis 4, wobei die Montagevorrichtung (4) Mittel (13) zum Befestigen von einem oder mehreren Bedienhilfen (8) umfasst.

6. Verfahren nach einem der Ansprüche 1 bis 5, wobei das Verfahren des Weiteren die Schritte des Öffnens eines Inspektionsfensters (5) in der Wand eines thermischen Reaktors (2), gefolgt von Platzieren eines hitzebeständigen Glases (7) vor dem offenen Inspektionsfenster (5) umfasst, bevor die Wärmekamera (3) vor dem Glas (7) positioniert wird.

7. Verfahren nach einem der Ansprüche 1 bis 6, wobei die Oberfläche des Objekts (1) eine Metalloberfläche ist, wobei das Metall vorzugsweise ein Hochtemperaturlegierungsstahl ist, der Nickel und Chrom umfasst; und/oder das Objekt (1) vorzugsweise eine Spirale, insbesondere eine Crack-Spirale ist.

8. Verfahren nach einem der Ansprüche 1 bis 7, wobei Detektieren der Temperatur auf der Oberfläche des Objekts (1) Detektieren des maximalen und des minimalen Temperaturwerts und Berechnen der durchschnittlichen Temperatur innerhalb des vorbestimmten Bereichs (6) auf der Oberfläche des Objekts (1) umfasst.

9. Verfahren nach einem der Ansprüche 1 bis 8, wobei die erhaltenen Daten zum Bestimmen der maximalen Betriebstemperatur des Objekts (1) verwendet werden.

10. Apparat, der einen thermischen Reaktor (2) mit einem Inspektionsfenster (5), ein Objekt (1), das sich innerhalb des thermischen Reaktors (2) befindet, und eine Kurzwellen-Wärmekamera (3) aufweist, die in einer Montagevorrichtung (4) montiert ist, die eine justierbare Halterung (11) aufweist, die ausgestaltet ist, um die Kurzwellen-Wärmekamera (3) aufzunehmen, wobei die Montagevorrichtung (4) an der Außenseite des thermischen Reaktors (2) befestigt ist und die Montagevorrichtung (4) vor dem Inspektionsfenster (5) auf der Außenseite des thermischen Reaktors (2) positioniert ist, wobei die Kamera (3) eine Betriebswellenlänge von 0,5 bis 3,5 µm, vorzugsweise 0,85 bis 1,1 µm aufweist, wobei der Apparat des Weiteren Speichermittel und Steuermittel umfasst, die mit der Kamera verbunden sind und ausgestaltet sind, um die Schritte b) bis e) von Anspruch 1 durchzuführen, und wobei der Apparat **dadurch gekennzeichnet ist, dass** er eine Scanvorrichtung (9) zum Scannen eines Barcodes (10) umfasst, wobei die Scanvorrichtung mit den Steuermitteln (9) verbunden ist und die Steuermittel ausgestaltet sind, um den Verfahrensschritt f) von Anspruch 1 auszuführen.

11. Verfahren zum Cracken von Kohlenwasserstoffen, umfassend die folgenden Schritte:
- Einspeisen eines Einsatzmaterials aus Kohlenwasserstoffen in eine Crack-Spirale, die sich innerhalb eines thermischen Reaktors (2) befindet;
- Erhitzen des Einsatzmaterials innerhalb der Crack-Spirale mittels Wärmetausch;
- Messen der Temperatur auf der Oberfläche der Crack-Spirale; und
- Quenchen der Reaktionsprodukte, die die Spirale verlassen;
wobei Messen der Temperatur nach dem Verfahren gemäß einem der Ansprüche 2 bis 9 durchgeführt wird.

12. Verfahren nach Anspruch 11,
wobei Bestimmen der Oberflächentemperatur der Spirale während des Crack-Prozesses und/oder während des Entkokens der Spirale durchgeführt wird.

## Revendications

1. Procédé de détermination de la température de surface d'un objet (1) situé dans un réacteur thermique (2), comprenant les étapes de :
a) positionnement d'une caméra (3) thermique à ondes courtes à l'intérieur d'un dispositif de montage (4) présentant un dispositif de retenue (11) réglable conçu pour recevoir la caméra (3) thermique à ondes courtes, le dispositif de montage (4) étant attaché à l'extérieur du réacteur thermique (2) et le dispositif de montage (4) étant positionné devant une fenêtre d'inspection (5) sur l'extérieur du réacteur thermique (2) ;
b) mise au point de la caméra (3) sur la surface de l'objet (1) situé dans le réacteur thermique (2) ;
c) acquisition d'informations d'image par la caméra (3) ;
d) détermination de la température sur la surface de l'objet (1) en un ou plusieurs points à l'intérieur d'une zone prédéterminée (6) sur la base des informations d'image ;
e) stockage des informations d'image acquises et des données de température déterminées, la caméra (3) thermique étant une caméra thermique à ondes courtes présentant une longueur d'onde de fonctionnement de 0,5 à 3,5 µm et
le procédé étant **caractérisé en ce qu'**il comprend une étape de :
f) récupération d'informations d'identification d'objet par balayage d'un code à barres (10) et ajustement de la position et/ou de la mise au point de la caméra (3) selon les informations d'identification d'objet et les informations d'identification d'objet comprenant des informations concernant la position de l'objet (1) par rapport à la caméra (3) et des informations concernant la position de la zone prédéterminée (6) sur la surface de l'objet (1).

2. Procédé selon la revendication 1, un ou plusieurs dispositifs de fixation (14) étant installés à l'extérieur du réacteur thermique (2) et le dispositif de montage (4) étant attaché audit un ou auxdits plusieurs dispositifs de fixation (14).

3. Procédé selon la revendication 1 ou 2, le dispositif de montage (4) et ledit un ou lesdits plusieurs dispositifs de fixation (14) étant reliés par complémentarité de forme.

4. Procédé selon l'une quelconque des revendications 1 à 3, ledit un ou lesdits plusieurs dispositifs de fixation (14) étant équipés de moyens de positionnement (12a, 12b) qui permettent d'attacher le dispositif de montage (4) au dispositif de fixation (14) dans différentes positions.

5. Procédé selon l'une quelconque des revendications 1 à 4, le dispositif de montage (4) comprenant des moyens (13) destinés à attacher un ou plusieurs auxiliaires de fonctionnement (8).

6. Procédé selon l'une quelconque des revendications 1 à 5, le procédé comprenant en outre l'étape d'ouverture d'une fenêtre d'inspection (5) dans la paroi d'un réacteur thermique (2), suivie de la mise en place d'un verre (7) résistant à la chaleur devant la fenêtre d'inspection (5) ouverte avant le positionnement de la caméra thermique (3) devant le verre (7).

7. Procédé selon l'une quelconque des revendications 1 à 6, la surface de l'objet (1) étant une surface métallique, le métal étant de préférence un acier allié à haute température comprenant du nickel et du chrome ; et/ou l'objet (1) étant de préférence un serpentin, en particulier un serpentin de craquage.

8. Procédé selon l'une quelconque des revendications 1 à 7, la détection de la température sur la surface de l'objet (1) comprenant la détection de la valeur de température maximale et minimale et le calcul de la température moyenne à l'intérieur de la zone prédéterminée (6) sur la surface de l'objet (1).

9. Procédé selon l'une quelconque des revendications 1 à 8, les données obtenues étant utilisées pour déterminer la température maximale de fonctionnement de l'objet (1).

10. Appareil présentant un réacteur thermique (2) pourvu d'une fenêtre d'inspection (5), un objet (1) situé dans le réacteur thermique (2) et une caméra (3) thermique à ondes courtes montée dans un dispositif de montage (4) présentant un dispositif de retenue (11) réglable conçu pour recevoir la caméra (3) thermique à ondes courtes, le dispositif de montage (4) étant attaché à l'extérieur du réacteur thermique (2) et le dispositif de montage (4) étant positionné devant la fenêtre d'inspection (5) sur l'extérieur du réacteur thermique (2), la caméra (3) présentant une longueur d'onde de fonctionnement de 0,5 à 3,5 µm, de préférence de 0,85 à 1,1 µm, l'appareil comprenant en outre des moyens de stockage et des moyens de commande qui sont connectés à la caméra et conçus pour mettre en œuvre les étapes b) à e) selon la revendication 1 et l'appareil étant **caractérisé en ce qu'**il comprend un dispositif de balayage (9) destiné à balayer un code à barres (10), le dispositif de balayage étant connecté aux moyens de commande (9) et les moyens de commande étant conçus pour mettre en œuvre l'étape de procédé f) selon la revendication 1.

11. Procédé de craquage d'hydrocarbures comprenant les étapes suivantes :
- introduction d'une charge d'hydrocarbures dans un serpentin de craquage situé dans un réacteur thermique (2) ;
- chauffage de la charge dans le serpentin de craquage par échange de chaleur ;
- mesure de la température sur la surface du serpentin de craquage ; et
- refroidissement brusque des produits de réaction quittant le serpentin ;
la mesure de la température étant mise en œuvre par le procédé selon l'une quelconque des revendications 2 à 9.

12. Procédé selon la revendication 11,
la détermination de la température de surface du serpentin étant mise en œuvre pendant le procédé de craquage et/ou pendant le décokage du serpentin.
